# EUROPÄISCHE PATENTSCHRIFT

(11) **EP 1 471 076 B1**
(45) Veröffentlichungstag und Bekanntmachung des Hinweises auf die Patenterteilung: **29.02.2012**
(21) Anmeldenummer: 04008706.6
(22) Anmeldetag: 13.04.2004
(51) Int. Cl.: C08C 1/02, C08F 36/18, C09J 111/02

(54) **Wässrige Klebstoff-Dispersionen**
Aqueous adhesive compositions
Compositions adhésives aqueuses

(30) Priorität: 22.04.2003 DE 10318107
(43) Veröffentlichungstag der Anmeldung: 27.10.2004
(73) Patentinhaber: LANXESS Deutschland GmbH, 51369 Leverkusen (DE)
(72) Erfinder: Musch, Rüdiger, Dr., 51467 Bergisch-Gladbach (DE); Oppenheimer-Stix, Christiane, Dr., 41468 Neuss (DE); Panskus, Knut, 51375 Leverkusen (DE); Mottweiler, Renke, Dr., 51373 Leverkusen (DE); Schildan, Norbert, 51065 Köln (DE)

(56) Entgegenhaltungen:
- WO-A-02/24825
- US-A- 3 639 301
- US-A1- 2002 120 045
- US-B1- 6 525 132

## Beschreibung

Die Erfindung betrifft Polychloropren-Dispersionen mit verbesserter Lagerstabilität und Klebeeigenschaften, ein Verfahren zu deren Herstellung und deren Verwendung als Kontakthaftkleber für anorganische oder organische Substrate.

Die Polychloroprenherstellung ist seit langem bekannt, sie erfolgt durch Emulsions-polymerisation im alkalischen wässrigen Medium, vgl. "Ullmanns Encyclopädie der technischen Chemie", Band 9, S. 366, Verlag Urban und Schwarzenberg, München-Berlin 1957; "Encyclopedia of Polymer Science and Technology", Vol. 3, S. 705-730, John Wiley, New York 1965; "Methoden der Organischen Chemie" (Houben-Weyl) XIV/1, 738 f. Georg Thieme Verlag Stuttgart 1961.

Als Emulgatoren kommen prinzipiell alle Verbindungen und deren Mischungen in Betracht, die die Emulsion hinreichend stabilisieren, wie z.B. die wasserlöslichen Salze, insbesondere die Natrium-, Kalium und Ammoniumsalze von langkettigen Fettsäuren, Kolophonium und Kolophoniumderivate, höhermolekulare Alkoholsulfate, Arylsulfonsäuren, Formaldehyd-kondensate von Arylsulfonsäuren, nichtionische Emutgatoren auf Polyethylenoxid- und Polypropylenoxidbasis sowie emulgierend wirkende Polymere wie Polyvinylalkohol (DE-A 2 307 811, DE-A 2 426 012, DE-A 2 514 666, DE-A 2 527 320, DE-A 2 755 074, DE-A 3 246 748, DE-A 1 271 405, DE-A 1 301 502, US-A 2 234 215, JP-A 60-31 510.

Polychloropren wird entweder nach entsprechender Compoundierung und Vulkanisation zur Herstellung von technischen Gummiartikeln verwendet, oder es wird als Kontaktklebstoffrohstoff eingesetzt. (Handbook of Adhesives; Kapitel 21, Verlag Van Nostrand Reinhold, New York 2 Auflage 1977.)

Kontaktklebstoffe auf Basis von Polychloropren sind überwiegend lösemittelhaltige Klebstoffe, die man auf beide zu verbindenden Teile aufbringt und trocknen läßt.

Durch anschließendes Fügen beider Teile unter Druck erhält man eine Verbindung mit hoher Festigkeit bei Raumtemperatur und nach Zusatz entsprechender hochschmelzender Harze auch bei höheren Temperaturen (Wärmestandfestigkeit).

Aus ökologischen und ökonomischen Gründen besteht ein wachsender Bedarf an geeigneten wässrigen Polychloropren-Dispersionen, die sich zu entsprechenden wässrigen Klebstoff-Formulierungen verarbeiten lassen. Nachteilig ist hier jedoch, dass der pH-Wert dieser alkalischen Dispersionen während der Lagerung selbst bei Raumtemperatur schon nach kurzer Lagerzeit abfällt. Dieser unerwünschte Effekt beschleunigt sich bei höheren Lagertemperaturen. Versand und Lagerung beim Kunden kann daher nur in Thermokontainern erfolgen. Klebstoff-Formulierungen, hergestellt aus diesen Dispersionen, zeigen ebenfalls diese Änderung des pH Wertes während der Lagerung und müssen entsprechend abgepuffert werden.

Der Zusatz von hochschmelzenden Harzen, wie z.B. Magnesium-Chelatkomplexen von Alkylphenolharzen - die die Wärmebeständigkeit der Verklebungen von lösemittelhaltigen Klebstoffen deutlich erhöhen - ist im Bereich der Formulierungen von Polychloropren Dispersionen nicht möglich. Auch die Herstellung von Verklebungen mit hoher Wärmebeständigkeit durch Zusatz von Polyisocyanaten zur Klebstoff-Formulierung - ein Verfahren, dass bei lösemittelhaltigen Polychloropren Klebstoffen seit langem bekannt ist - führt bei Formulierungen auf Basis von wässrigen Polychloropren Dispersionen nur zu einem moderaten Anstieg der Wärmebeständigkeit, da die Polyisocyanat-Dispersion vorwiegend mit den Wassermolekülen zu Harnstoff und nur im geringen Umfang mit den wenigen reaktiven Gruppen im Polychloropren reagiert.

Aufgabe war es daher, eine wässrige Polychloropren-Dispersion bereitzustellen, die sich durch eine lange Lagerbeständigkeit auszeichnet, d.h. deren pH-Wert sich während der Lagerzeit nicht signifikant ändert, die in Klebstoff-Formulierungen eine Verklebung mit hoher Anfangsfestigkeit und hoher Wärmebeständigkeit - vorzugsweise ohne Zusatz eines hochschmelzenden Harzes - erreicht und die eine deutlich höhere Reaktivität gegenüber Polyisocyanat-Dispersionen besitzt.

Aus dem Stand der Technik ist die Temperung von Polychloropren-Dispersionen mit hohem Feststoffgehalt bekannt. In EP-A 0 857 741 wird beschrieben, dass man durch Lagerung der Dispersion bei 50°C ein Produkt mit guter Reaktivität gegenüber dispergierten Polyisocyanaten erhält. Nachteilig macht sich hier bemerkbar, dass man durch diesen Vorgang den pH-Wert der Dispersion deutlich erniedrigt und den Elektrolytgehalt signifikant erhöht. Beides erniedrigt die Stabilität bei Lagerung und bei der Formulierung zu Klebstoffen.

Weiterhin ist die Herstellung von vernetzten (gelhaltigen) Polychloropren-Dispersionen bekannt. In US-A 5 773 544 wird diese Polymerisation beschrieben. Man erhält durch eine Polymerisation bis zu hohem Monomerumsatz gelhaltige Polymerdispersionen, die sich in Klebstoff-Formulierungen durch ihren hohen Wärmestand auszeichnen. Nachteilig macht sich auch hier die geringe Lagerbeständigkeit der Dispersionen bemerkbar.

Des weiteren offenbart US 3,639,301 eine Polychloropren-Dispersion zur Herstellung von Polyisocyanat- modifizierten Schäumen, wobei Chloropren gemäß US 2,405,724 in einer Emulsionspolymerisation bei 40°C vollständig polymerisiert wird.

Die Lösung der Aufgabe wurde durch die Bereitstellung einer wässrigen Polychloropren-Dispersion erreicht, erhältlich durch kontinuierliche oder diskontinuierliche Polymerisation von Chloropren in wässriger Emulsion, ohne oder unter Zusatz einer nur geringen Menge eines Reglers, gegebenenfalls Entfernung des restlichen Monomeren und Lagerung unter bestimmten Bedingungen, wobei die gewünschte Polymerstruktur unter Erhöhung der Gelanteile gezielt eingestellt werden kann. Diese wässrige Klebstoffrohstoff-Dispersion kann dann mit denen im Stand der Technik bekannnten Klebstoffhilfs- und Zusatzmitteln zu einer Klebstoffzusammensetzung verarbeitet werden.

Gegenstand der Erfindung ist somit eine wässrige Polymerdispersion erhältlich durch
a) Herstellung einer wässrige Polychloropren-Dispersion mit einem in organischen Lösemitteln unlöslichen Anteil (Gelanteil) von 0,1 Gew.- % - 30 Gew.-%, bezogen auf das Polymere, hergestellt durch Polymerisation von Chloropren und 10 bis 20 Gew-Teilen, bezogen auf 100 Gew-Teile Chloropren mit Chloropren copolymerisierbare ethylenisch ungesättigte Monomere in Gegenwart von 0-1 mmol eines Reglers bezogen auf 100g Monomer, bei 10°C-25°C in wässriger Emulsion und
b) einer anschließenden Lagerung der Dispersion bei Temperaturen von 50°C ― 110°C solange bis der Gelanteil um mindestens 10 % auf 1 ― 60 Gew.-%, bezogen auf das Polymere, angestiegen ist.

Geeignete copolymerisierbare Monomere werden z. B. beschrieben in "Methoden der Organischen Chemie" (Houben-Weyl) XIV/1, 738 f. Georg Thieme Verlag Stuttgart 1961. Bevorzugt sind Verbindungen mit 3 bis 12 C-Atomen und 1 oder 2 copolymerisierbaren C=C-Doppelbindungen pro Molekül. Beispiele bevorzugter copolymerisierbarer Monomere sind 2,3-Dichlorbutadien und 1-Chlorbutadien.

Die im erfindungsgemäßen Verfahren einzusetzende Polychloropren-Dispersion wird durch Emulsionspolymerisation bei 0 bis 70°C, vorzugsweise bei 5 bis 45°C und pH-Werten von 10 bis 14, vorzugsweise pH 11 bis pH 13 hergestellt. Die Aktivierung erfolgt durch die üblichen Aktivatoren bzw. Aktivatorsysteme.

Vorzugsweise hat die Polychloropren Dispersion einen Partikeldurchmessser von 60 bis 120 nm.

Als Beispiele für Aktivatoren bzw. Aktivatorsysteme seien genannt: Formamidinsulfinsäure, Kaliumperoxodisulfat, Redoxsysteme auf Basis von Kaliumperoxodisulfat und gegebenenfalls Silbersalz (Na-Salz der Anthrachinon-β-sulfonsäure) wobei beispielsweise Verbindungen wie Formamidinsulfinsäure, das Na-Salz der Hydroxymethansulfinsäure, Natriumsulfit und Natriumdithionit als Redoxpartner dienen. Auch Redoxsysteme auf Basis von Peroxiden und Hydroperoxiden sind geeignet. Die Herstellung der erfindungsgemäßen Polychloroprene kann sowohl kontinuierlich als auch diskontinuierlich erfolgen, wobei die kontinuierliche Polymerisation bevorzugt ist.

Zur Viskositätseinstellung der erfindungsgemäßen Polychloroprene können übliche Kettenübertragungsmittel wie Mercaptane, wie sie z.B. in DE-A 3 002 711, GB-A 1 048 235, FR-A 2 073 106 beschrieben sind, oder wie Xanthogendisulfide, wie sie z.B. in DE-A 1 186 215, in DE-A 2 156 453, DE-A 2 306 610 und DE-A 3 044 811, in der EP-A 0 053 319, in den GB-A 512 458 und GB-A 952 156 und in US-A 2 321 693 und US-A 2 567 117 beschrieben sind, verwendet werden.

Besonders bevorzugte Kettenübertragungsmittel sind n-Dodecylmercaptan und die in DE-A 3 044 811, DE-A 2 306 610 und DE-A 2 156 453 verwendeten Xanthogen-disulfide.

Die Polymerisation wird üblicherweise bei 50% -95%, bevorzugt bei 60% - 80% des Monomerumsatzes abgebrochen, wobei man als Inhibitor z.B. Phenothiazin, tert-Butylbrenzcatechin oder Diethylhydroxylamin zugeben kann. Bei dieser radikalischen Emulsions-Polymerisation wird das Monomere in die wachsende Polymerkette in unterschiedlichen Stellungen eingebaut, so z.B. bei einer Polymerisationstemperatur von 42°C zu 92,5 % in trans-1,4-Stellung, zu 5,2 % in cis-1,2-Stellung, zu 1,2 % in 1,2-Stellung und zu 1,1 % in 3,4-Stellung (W.Obrecht in Houben-Weyl: Methoden der organischen Chemie Bd. 20 Teil 3 Makromolekulare Stoffe, (1987) S. 845) wobei das in 1,2-Stellung eingebaute Monomer ein labiles, leicht abspaltbares Chloratom enthält. Dies ist die aktive Spezies, über die die Vulkanisation mit Metalloxiden verläuft.

Nach der Polymerisation wird vorzugsweise das restliche Chloropren Monomer beispielsweise durch eine Wasserdampfdestillation entfernt. Sie wird durchgeführt wie z.B beschrieben in "W.Obrecht in Houben-Weyl: Methoden der organischen Chemie Bd. 20 Teil 3 Makromolekulare Stoffe, (1987) S. 852".

Die auf diese Weise hergestellte monomerarme Polychloropren-Dispersion wird anschließend bei höheren Temperaturen gelagert. Dabei wird einmal ein Teil der labilen Chloratome abgespalten und ein Polychloropren-Netzwerk aufgebaut, das sich in organischen Lösungsmitteln nicht löst (Gel), wobei sich der Gelanteil um mindestens 10 %, vorzugsweise mindestens 20 % und insbesondere mindestens 50 % erhöht. Es unterscheidet sich deutlich von dem durch Polymerisation hergestellten vernetzten Polychloroprengel, siehe Messmethode 4 (TMA Messung).

In einem weiteren Schritt kann der Feststoffgehalt der Dispersion durch einen Aufrahmprozess erhöht werden. Diese Aufrahmung erfolgt z.B. durch Zusatz von Alginaten, wie in "Neoprene Latices , John C. Carl, E.I. Du Pont 1964, S.13" beschrieben.

Gegenstand der vorliegenden Erfindung ist somit auch die Herstellung einer teilweise vemetzten Polychloropren-Dispersion durch:
- Polymerisation von Chloropren und 0 bis 20 Gew.-Teilen, bezogen auf 100 Gew.-Teile Chloropren, mit Chloropren copolymerisierbaren ethylenisch ungesättigten Monomeren in Gegenwart von 0 - 1 mmol eines Reglers, bezogen auf 100 g Monomer, bevorzugt 0 - 0,25 mmol bei Temperaturen von 10°C - 25°C, in wässriger, vorzugsweise alkalischer Emulsion, wobei die Dispersion einen in organischen Lösemitteln unlöslichen Anteil von 0,1 ― 30 Gew.-% , bevorzugt 0,5 ― 5 Gew.-%, bezogen auf das Polymere, hat,
- gegebenenfalls Entfernung des restlichen, nicht polymerisierten Monomeren beispielsweise durch Wasserdampfdestillation
- Lagerung der Dispersion, bei Temperaturen von 50°C ― 110°C, bevorzugt 60°C -100°C, besonders bevorzugt 70°C - 90°C, wobei der in organischen Lösemitteln unlösliche Anteil (Gelanteil) um mindestens 10 % auf 1 Gew.-% - 60 Gew.-% ansteigt, bevorzugt auf 5 Gew.-% -30 Gew.-%, besonders bevorzugt auf 10 - 20 Gew.-%, (dies dauert je nach System beispielsweise 3 Stunden bis 14 Tage und ist durch orientierende Vorversuche zu ermitteln)
- gegebenenfalls Erhöhung des Feststoffanteils auf 50 - 64 Gew.-%, bevorzugt auf 52 - 59 Gew.-% durch einen Aufrahmprozess, wodurch eine Dispersion mit einem sehr niedrigen Salzgehalt entsteht, insbesondere einem niedrigen Gehalt an Chlorid-Ionen, der besonders bevorzugt kleiner als 500 ppm ist.

Gegenstand der Erfindung sind auch Klebstoff-Formulierungen basierend auf den erfindungsgemäßen Polychloropren-Dispersionen sowie Verfahren zu deren Herstellung.

Bevorzugte, in Form einer Dispersion vorliegende Klebstoffzusammensetzungen enthalten 100 Gew.-Teile einer Polychloroprendispersion, 15 bis 75 Gew.-Teile eines Klebharzes, 1 bis 10 Teile eines Metalloxids, bevorzugt Zinkoxid, sowie gegebenfalls weitere Hilfs- und Zusatzstoffe.

Die erfindungsgemäßen Polychloropren-Dispersionen können gegebenenfalls auch andere Dispersionen wie z.B. Polyacrylat-, Polyvinylidenchlorid-, Polybutadien-, Polyvinylacetat- oder Styrol-Butadien-Dispersionen in einem Anteil von bis zu 30 Gew.-% enthalten.

Zur Herstellung einer erfindungsgemäßen Klebstoffzusammensetzung werden erfindungsgemäße Polychloropren-Dispersion(en) mit den üblichen Klebstoffhilfs- und Zusatzmitteln vermischt.

Die erfindungsgemäße Klebstoffzusammensetzung ist frei von oder arm an organischen Lösungsmitteln. In diesem Zusammenhang bedeutet "arm" einen Gehalt von weniger als 30 Gew.-% organisches Lösungsmittel, bezogen auf den fertigen Klebstoff.

Die erfindungsgemäße Klebstoffzusammensetzung enthält neben der Polychloropren-Dispersion gegebenenfalls weitere Klebstoffhilfs- und Zusatzmittel. Beispielsweise können Füllstoffe wie Quarzmehl, Quarzsand, hochdisperse Kieselsäure, Schwerspat, Calciumcarbonat, Kreide, Dolomit oder Talkum, gegebenenfalls zusammen mit Netzmitteln, beispielsweise Polyphosphaten (wie Natriumhexametaphosphat), Naphthalinsulfonsäure, Ammonium- oder Natriumpolyacrylsäuresalze, zugesetzt werden, wobei die Füllstoffe im allgemeinen in Mengen von 10 bis 60%, vorzugsweise von 20 bis 50 Gew.-%, bezogen auf Klebstoff, und die Netzmittel im allgemeinen in Mengen von 0,2 bis 0,6 Gew.-%, bezogen auf Füllstoff, zugesetzt werden.

Besondere Bedeutung als Zusatzmittel hat Zinkoxid als Akzeptor für geringe Mengen von Chlorwasserstoff, der von den Polymerisaten abgespalten werden kann.

Weitere geeignete Hilfsmittel sind beispielsweise in Mengen von 0,01 bis 1 Gew.-%, bezogen auf Klebstoff, einzusetzende organische Verdickungsmittel, wie Cellulosederivate, Alginate, Stärke, Stärkederivate oder Polyacrylsäure oder in Mengen von 0,05 bis 5 Gew.-%, bezogen auf Klebstoff, einzusetzende anorganische Verdickungsmittel, wie beispielsweise Bentonite.

Zur Konservierung können der erfindungsgemäßen Klebstoffzusammensetzung auch Fungizide zugesetzt werden. Diese kommen im allgemeinen in Mengen von 0,02 bis 1 Gew.-%, bezogen auf Klebstoff, zum Einsatz. Geeignete Fungizide sind beispielsweise Phenol- und Kresolderivate oder zinnorganische Verbindungen.

Auch klebrigmachende Harze, wie z.B. unmodifizierte oder modifizierte Naturharze wie Kolophoniumester, Kohlenwasserstoffharze oder synthetische Harze wie Phthalatharze können der Klebstoffzusammensetzung in dispergierter Form gegebenenfalls zugesetzt werden, vgl. "Klebharze" R. Jordan, R. Hinterwaldner, S75-115, Hinterwaldner Verlag München 1994. Bevorzugt sind Alkylphenolharz-Dispersionen mit Erweichungspunkten größer 110°C.

Organische Lösungsmittel wie beispielsweise Toluol, Xylol, Butylacetat, Methylethylketon, Ethylacetat, Dioxan oder deren Gemische oder Weichmacher wie beispielsweise solche auf Adipat-, Phthalat- oder Phosphatbasis können gegebenenfalls den Polychloropren- Dispersionen zugesetzt werden.

Die erfindungsgemäßen Klebstoffe können zum Verkleben beliebiger Substrate gleicher oder verschiedener Art, z.B. von Holz, Papier, Kunststoffen, Textilien, Leder, Gummi und anorganischen Materialien, wie Keramik, Steingut oder Asbestzement verwendet werden.

### Beispiele:

### A1) Herstellung der Polychloropren-Dispersionen

Die Polymerisation erfolgt durch einen Konti-Prozess, wie er in der EP-A 0 032 977 beschrieben ist.

### Beispiel A (Vergleichsbeispiel)

In den ersten Reaktor einer Polymerisationskaskade, bestehend aus 7 gleichen Reaktoren mit einem Volumen von je 50 Liter werden die wässrige Phase (W) und die Monomerphase (M) über eine Meß- und Regelapparatur in stets konstantem Verhältnis sowie die Aktivatorphase (A) eingefahren. Die mittlere Verweilzeit je Kessel beträgt 25 Minuten. Die Reaktoren entsprechen denen in der DE-A 2 650 714 beschriebenen (Angaben in Gew.-Teilen pro 100 g Gew.-Teile eingesetzte Monomere).

| (M) = Monomerphase: | |
|---|---|
| Chloropren | 100,0 Gew.-Teile |
| n-Dodecylmercaptan | 0,11 Gew.-Teile |
| Phenothiazin | 0,005 Gew.-Teile |

| (W) = wässrige Phase: | |
|---|---|
| Entsalztes Wasser | 115,0 Gew.-Teile |
| Natriumsalz einer disproportionierten Abietinsäure | 2,6 Gew.-Teile |
| Kaliumhydroxyd | 1,0 Gew.-Teile |

| (A) = Aktivatorphase: | |
|---|---|
| 1 %ige wässrige Formamidinsulfinsäurelösung | 0,05 Gew.Teile |
| Kaliumpersulfat | 0,05 Gew.Teile |
| Anthrachinon-2-sulfonsäure-Na-salz | 0,005 Gew.Teile |

Bei einer Innentemperatur von 15°C springt die Reaktion leicht an. Durch eine Außenkühlung wird die freiwerdende Polymerisationswärme abgeführt und die Polymerisationstemperatur auf 10°C gehalten. Bei einem Monomerumsatz von 70 % wird die Reaktion durch Zugabe von Diethylhydroxylamin abgebrochen. Das restliche Monomere wird durch Wasserdampfdestillation aus dem Polymeren entfernt. Der Feststoffgehalt liegt bei 33 Gew.-%, der Gelgehalt bei 0 Gew.-%, der pH Wert bei 13.

Nach einer Polymerisationszeit von 120 Stunden wird die Polymerisationsstraße ausgefahren

### Beispiel B (Vergleichsbeispiel)

Man verfährt wie im Beispiel A, reduziert jedoch den Regleranteil auf 0,03 Gew.-%, erhöht den Monomerumsatz auf 80% und die Polymerisationstemperatur auf 45°C um ein Polymer mit hohem Gelgehalt zu erzeugen.

Der Feststoffgehalt liegt bei 38 Gew.-% und der Gelgehalt bei 60 Gew.-%, der pH-Wert bei 12,9.

### Beispiel C (erfindungsgemäßes Beispiel)

Man verfährt wie im Beispiel A, polymerisiert jedoch bis zu einem Monomerumsatz von 80% mit 0,03% Regler n-Dodecylmercaptan.

Der Feststoffgehalt liegt bei 38 Gew.-% und der Gelgehalt bei 4 Gew.-%, der pH-Wert bei 12,8.

### Beispiel D (erfindungsgemäßes Beispiel)

Man verfährt wie im Beispiel C, polymerisiert ohne den Regler n-Dodecylmercaptan, jedoch bis zu einem Monomerumsatz von 70 %.

Der Feststoffgehalt liegt bei 33 Gew.-% und der Gelgehalt bei 15 Gew.-%, der pH-Wert bei 13,0.

### Beispiel E (erfindungsgemäßes Beispiel)

Man verfährt wie im Beispiel A, reduziert jedoch in der Monomerphase den Reglergehalt auf 0,03 Gew.-%.

Der Feststoffgehalt liegt bei 33 Gew.-% und der Gelgehalt bei 1,2 Gew.-%, der pH-Wert bei 12,9.

### Beispiel F (erfindungsgemäßes Beispiel)

Man verfährt wie im Beispiel A, reduziert jedoch in der Monomerphase den Reglergehalt auf 0,04 Gew.-%.

Der Feststoffgehalt liegt bei 33 Gew.-% und der Gelgehalt bei 1 Gew.-%, der pH-Wert bei 13,1.

### A2) Temperung der Dispersionen

Nach der Wasserdampfdestillation werden die Dispersionen in einem isolierten Lagertank 6 Stunden bis 6 Tage bei Temperaturen zwischen 60 und 90°C getempert, wobei die Temperatur gegebenenfalls durch eine Zusatzheizung nachreguliert wird und der Anstieg des Gelgehaltes im Latex an Hand von Proben gemessen.

### A3) Aufrahmprozess

Festes Alginat (Manutex) wird in entionisiertem Wasser aufgelöst und eine 2 gew.-%ige Alginat-Lösung hergestellt. In acht 250ml Glasflaschen werden je 200 g der Polychloropren-Dispersion vorgelegt und mit jeweils 6 bis 20g der Alginatlösung - in 2 g Schritten - eingerührt. Nach einer Lagerzeit von 24 Stunden wird die Menge des entstandenen Serums über dem Dicklatex gemessen. Die Alginatmenge der Probe mit der stärksten Serumbildung wird mit 5 multipliziert und ergibt die optimale Alginatmeng für die Aufrahmung von 1 kg Polychloropren-Dispersion.

### B) Meßmethoden

### 1. Bestimmung des Gelgehaltes aus der Dispersion

Das im Latex befindliche Polymer wird durch Umlösen aus der Dispersion herausextrahiert. Dies geschieht durch Mischen der Dispersion mit Toluol und Essigsäure und Zusatz von Alkylenbenzyldimethylammoniumchlorid. Der im Polymer enthaltene Gelanteil wird durch Zentrifugation abgetrennt, getrocknet und gewogen.

### 2. Bestimmung der Schälfestigkeit

Die Prüfung erfolgt gemäß EN 1392. Auf zwei Prüfkörper aus Nora-Gummi (Styrol-Butadien-Rubber, SBR), gerauht mit Schleifpapier (Körnung = 80), wird ein 100 µm dicker Nassfilm der Dispersion aufgetragen und 1 Stunde bei Raumtemperatur gelüftet.

Anschließend werden die Prüflinge nach:
Methode A : schockaktiviert und 10 Sekunden lang mit 4 bar zusammengefügt oder
Methode B : ohne Aktivierung 10 Sekunden lang mit 4 bar zusammengefügt.

Es erfolgt eine Reißprüfung auf einer handelsüblichen Zugprüfmaschine bei Raumtemperatur. Es werden die Festigkeitswerte sofort nach der Verklebung und nach einem Tag ermittelt.

### Schockaktivierung

Die Klebeflächen werden 4 Sekunden mit einem IR-Strahler der Fa. Funk (Schockaktiviergerät 2000) bestrahlt. Die Verklebung erfolgt sofort nach Wärmeaktivierung der mit Klebstoff beschichteten Prüfkörper, indem die aktivierten Klebeschichten gegeneinander gelegt und in einer Presse verpresst werden. Die so hergestellten Prüfkörper werden bei 23°C und 50 % relativer Feuchte gelagert.

### 3. Wärmeprüfung

Die NORA-Prüfkörper werden mit einer Überlappung von 2 cm² verklebt, mit 4 kg belastet und in einem Heizschrank innerhalb von 30 min. auf 40°C temperiert. Anschließend werden die Prüfkörper mit einer linearen Heizrate von 0,5°C/min. auf 150°C aufgeheizt. Die Erweichungstemperatur, d.h. die Temperatur in °C bei der die Klebung unter der 4 kg Last im Scherversuch versagt, wird registriert. Es werden jeweils 5 Einzelmessungen durchgeführt.

### 4. TMA Messung

Die Dispersionen werden als Film getrocknet und zwar 3 Tage bei Raumtemperatur, 1 Stunde bei 80°C und danach noch einmal 3 Tage bei Raumtemperatur, wobei ein Film mit einer Dicke von 1,0 mm bis 1,5 mm entstehen soll. Gemessen wird mit einem Gerät der Firma Perkin Elmer DMA 7 bei einer Belastung von 500 mN und einem Temperaturprogramm von -100°C bis +240°C, Steigerungsrate 5°/min. Gemessen wird die Eindringtiefe des Messkopfes bei der entsprechenden Temperatur.

### C) Erfindungsgemäße Temperung einer Polychloropren-Dispersion nach der Polymerisation

**Tab. 1 : Einfluß der Temperung auf den Gelgehalt**

| Disp. aus Beisp. | Regler (%) | Poly-Temp. (°C) | Umsatz (%) | Gelgehalt (%) | Gelgehalt in % nach Temperung bei 80°C (Zeit in Tagen) | | | |
|---|---|---|---|---|---|---|---|---|
| | | | | | 1d | 2d | 3d | 4d |
| A | 0,11 | 10 | 70 | 0 | 0 | 0 | 0 | 1 |
| B | 0,03 | 45 | 80 | 60 | - | - | - | - |
| C*) | 0,03 | 10 | 80 | 4 | 7** | 12** | 22** | 28** |
| D*) | 0 | 10 | 70 | 15 | 30** | 47** | 82 | 90 |
| E*) | 0,03 | 10 | 71 | 1,2 | 8** | 10** | 16** | 20** |
| F*) | 0,04 | 10 | 70 | 1,0 | 4** | 6** | 9** | 12*** |

| | | | | | | | | |
|---|---|---|---|---|---|---|---|---|
| *) erfindungsgemäßes Beispiel | | | | | | | | |
| **) erfindungsgemäßer Gelgehalt | | | | | | | | |

### D) Erhöhung des Feststoffgehaltes der Dispersionen durch Aufrahmung

**Tab. 1: Alle 6 Dispersionen werden entsprechend der Vorschrift A3 aufgerahmt, Beispiele A, B und D ohne Temperung, Beispiele D bis F nach Temperung**

| Beispiel | 1 | 2 | 3*) | 4*) | 5*) | 6 | 7 | 8*) | 9*) | 10*) |
|---|---|---|---|---|---|---|---|---|---|---|
| Dispersion | A | B | D | D | | | | E | F | |
| Tage Temp. bei 80°C | 0 | 0 | 0 | 1 | 2 | 3 | 4 | 3 | 2 | 4 |
| Gelgehalt % | 0 | 60 | 15 | 30 | 47 | 82 | 90 | 16 | 6 | 12 |
| Feststoff in % | 58 | 55 | 58 | 56 | 55 | 56 | 53 | 56 | 57 | 57 |
| pH Wert | 12,9 | 12,8 | 12,8 | 12,9 | 12,8 | 12,7 | 12,7 | 12,7 | 12,8 | 12,8 |

### Abb.1 : Erweichungsverhalten von Polychloropren Filmen (TMA-Messung)

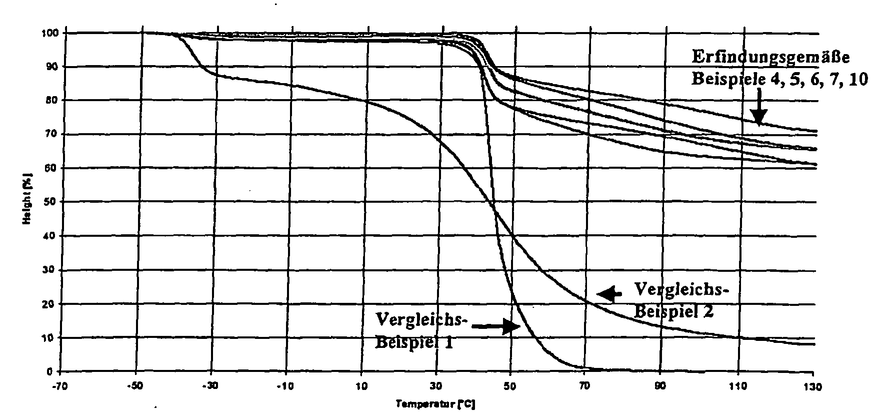

Wie Abb. 1 zeigt, führt der steigende Gelanteil in den Vergleichspolymerisaten zu einer leichten Verbesserung des Erweichungsverhaltens von Beispiel 1 (0 Gew.-% Gel) über Beispiel 2 (60 Gew.-% Gel).

Die erfindungsgemäßen Polymerisate zeigen, unabhängig vom Gelgehalt, ein deutlich niedrigeres Erweichungsverhalten, wie man an den Kurven der Beispiele 4, 5, 6, 7, 10 sieht.

### Abb.2: Lagerstabilität der Dispersion mit hohem Feststoffgehalt, nach der Aufrahmung

**Tab. 2: Einfluß der Lagertemperatur (Tage7/60°C) auf den pH Wert der Dispersionen**

| Beispiel | 1 | 2 | 3*) | 4*) | 5*) | 6 | 7 | 8*) | 9*) | 10*) |
|---|---|---|---|---|---|---|---|---|---|---|
| Dispersion | A | B | D | D | | | | E | F | |
| Tage Temp. bei 80°C | 0 | 0 | 0 | 1 | 2 | 3 | 4 | 3 | 2 | 4 |
| Gelgehalt % | 0 | 60 | 15 | 30 | 47 | 82 | 90 | 16 | 6 | 12 |
| pH Wert vor der Lagerung | 12,9 | 12,8 | 12,8 | 12,9 | 12,8 | 12,7 | 12,7 | 12,7 | 12,8 | 12,8 |
| pH Wert nach der Lagerung | 9,1 | 9,8 | 9,6 | 12,5 | 12,6 | 12,5 | 12,5 | 12,4 | 12,6 | 12,6 |

Wie aus Tab. 2 hervorgeht, sind alle getemperten Dispersionen (Beispiele 4 bis 10) nach der Aufrahmung gegenüber den ungetemperten Vergleichsmaterialien (Beispiele 1 bis 3) auch bei höheren Lagertemperaturen deutlich lagerstabiler, erkenntlich am kaum mehr stattfindenden Abfall des pH-Wertes nach Lagerung der Dispersionen gemäß Beispielen 4 bis 10.

### E) Herstellung eines Klebstoffs auf Basis der erfindungsgemäßen Polychloropren-Dispersion

**Tabelle 2 : Herstellung der Formulierung für die Vergleichsuntersuchungen**

| Produkt | Funktion | Zusatz als | Feststoffgehalt (%) | Gewichtsteile |
|---|---|---|---|---|
| Polychloroprendispersion | Polymer | Dispersion | 55-58 | 100 |
| Rhenofit® DDA-EM 50 (1) | Alterungsschutzmittel | Dispersion | 50 | 2 |
| Baykanol® PQ (2) | Stabilisator | Dispersion | 30 | 0,75 |
| Borchers 9802 (3) | ZnO | Dispersion | 50 | 4 |
| Dermulsene® TR 93 (4) | Harz | Dispersion | 50 | 30 |

Bezugsquellen:
(1): Rhein Chemie GmbH, Mannheim, D (50% Diphenylamin-Derivat in wässriger Emulsion )
(2): Bayer AG, Leverkusen, D (Natriumsalz eines Kondensationsproduktes aus Naphthalin-sulfonsäure und Formaldehyd)
(3): Borchers GmbH, Langenfeld, D (Zinkoxid-Paste)
(4): Fa. DRT (Les Derives Resiniques+Terpeniques, Cedex, Frankreich, (Terpenphenolharz-Dispersion )

Für die Herstellung der Formulierung wird die Polychloropren Dispersion in einem Becherglas vorgelegt. Unter rühren werden der Stabilisator, das Alterungsschutzmittel, ZnO und das Harz zugegeben.

### E1: Messung von Anfangs-Schälfestigkeit und Softening Point

Lagerzeit nach dem Auftrag der Klebstoffs 60 min, Verkleben mit Schockaktivierung (Methode A), Substrat: Leinen

| Beispiel Nr. | 1 | 9*) | 10*) | 3 | 8*) | 4*) | 5 | 6 | 7 |
|---|---|---|---|---|---|---|---|---|---|
| Gelgehalt (%) | 0 | 6 | 12 | 15 | 16 | 30 | 47 | 82 | 90 |
| Anfangsfestigkeit (N/mm) | 2,6 | 2,6 | 2,8 | 2,1 | 2,0 | 1,6 | 1,6 | 1,4 | 1,0 |
| Soft-point (°C) | 52 | 77 | 95 | 116 | 128 | 135 | 106 | 98 | 92 |

| | | | | | | | | | |
|---|---|---|---|---|---|---|---|---|---|
| *) erfindungsgemäßes Beispiel | | | | | | | | | |

Wie Tab.2 zeigt verringert sich die Anfangsfestigkeit der Klebung mit steigendem Gelgehalt der Dispersionen, während die Wärmestandfestigkeit (softening point) über ein Maximum läuft.

Es gibt 2 Bereiche:
A) Hier beeinflußt der Gelgehalt die Haftung nicht. Die erfindungsgemäßen Beispiele 9 und 10 zeigen gegenüber dem Vergleichspeispiel 1 bei vergleichbarer Anfangsfestigkeit einen deutlich höheren Wärmestand.
B) Hier führt der höhere Gelgehalt der Dispersionen zu einem Anstieg des Wärmestandes, wobei sich die erfindungsgemäßen Beispiele 4 und 8 vom ungetemperten Vergleichsbeispiel 3 durch eine deutlich bessere Lagerstabilität auszeichnen.
C) Bei hohem Gelgehalt der Dispersionen wird durch die schlechte Aktivierbarkeit der Formulierungen Festigkeit und Wärmestand negativ beeinflußt (Beispiele 5-7).

### E2: Messung von Anfangs-Schälfestigkeit und Softening Point

**Tab.3: Lagerzeit nach dem Auftrag der Klebstoffs 60 min, Verkleben ohne Schockaktivierung (Methode B), Substrat: NORA (SBR-Gummi)**

| Beispiel Nr. | 1 | 10*) | 4*) |
|---|---|---|---|
| Gelgehalt (%) | 0 | 12 | 30 |
| Anfangsfestigkeit (N/mm) | 2,4 | 2,5 | 1,5 |
| Softpoint (°C) | 51 | 77 | 95 |

Auch die Klebwerte an NORA-Gummi bestätigen die an Leinen gefundenen Abhängigkeiten (Tab.3).

## Patentansprüche

1. Wässrige Polymerdispersion erhältlich durch
a) Herstellung einer wässrigen Polychloropren-Dispersion mit einem in organischen Lösemitteln unlöslichen Anteil (Gelanteil) von 0,1 Gew.% - 30 Gew.%, bezogen auf das Polymere, hergestellt durch Polymerisation von Chloropren und 0 bis 20 Gew.-Teilen, bezogen auf 100 Gew.-Teile Chloropren, mit Chloropren copolymerisierbare ethylenisch ungesättigte Monomere in Gegenwart von 0-1 mmol eines Reglers, bezogen auf 100g Monomer, bei 10°C - 25°C in wässriger Emulsion und
b) einer anschließenden Lagerung der Dispersion bei Temperaturen von 50°C - 110°C solange bis der Gelanteil um mindestens 10 % auf 1 - 60 Gew.-%, bezogen auf das Polymere, angestiegen ist.

2. Wässrige Polymer-Dispersion gemäß Anspruch 1, **dadurch gekennzeichnet, dass** die Polychloropren Dispersion einen Partikeldurchmessser von 60 bis 120 nm hat.

3. Wässrige Polymer-Dispersion gemäß Anspruch 1, **dadurch gekennzeichnet, dass** der Reglergehalt bevorzugt bei 0 bis 0,25 mmol, bezogen auf 100 g Monomer, liegt.

4. Wässrige Polymer-Dispersion gemäß Anspruch 1, **dadurch gekennzeichnet, dass** die Dispersion vor der Temperung einen Gelgehalt von 0,5 - 5 Gew.-% hat.

5. Wässrige Polymer-Dispersion gemäß Anspruch 1, **dadurch gekennzeichnet, dass** die Lagerung der Dispersion bei 60°C bis 90°C erfolgt.

6. Wässrige Polymer-Dispersion gemäß Anspruch 1, **dadurch gekennzeichnet, dass** die Polychloropren-Dispersion nach der Temperung einen Gelgehalt von 5 bis 30 Gew.-% hat.

7. Verwendung der Polymer-Dispersionen gemäß Anspruch 1 zur Herstellung von Klebstoff-Formulierungen.

8. Klebstoff-Formulierungen enthaltend wässrige Polymer-Dispersion gemäß Anspruch 1.

9. Mit Klebstoff-Formulierungen gemäß Anspruch 8 beschichtete Substrate.

## Claims

1. Aqueous polymer dispersion obtainable by
a) preparing an aqueous polychloroprene dispersion having a fraction insoluble in organic solvents (gel fraction) of 0.1% by weight - 30% by weight, based on the polymer, prepared by polymerizing chloroprene and 0 to 20 parts by weight, based on 100 parts by weight of chloroprene, of ethylenically unsaturated monomers copolymerizable with chloroprene, in the presence of 0-1 mmol of a chain transfer regulator, based on 100 g of monomer, at 10°C-25°C, in aqueous emulsion, and
b) subsequent storage of the dispersion at temperatures of 50°C-110°C until the gel fraction has risen by at least 10% to 1%-60% by weight, based on the polymer.

2. Aqueous polymer dispersion according to Claim 1, **characterized in that** the polychloroprene dispersion has a particle diameter of from 60 to 120 nm.

3. Aqueous polymer dispersion according to Claim 1, **characterized in that** the regulator content is preferably 0 to 0.25 mmol, based on 100 g of monomer.

4. Aqueous polymer dispersion according to Claim 1, **characterized in that** the dispersion prior to the temperature treatment has a gel content of 0.5%-5% by weight.

5. Aqueous polymer dispersion according to Claim 1, **characterized in that** the dispersion is stored at 60°C to 90°C.

6. Aqueous polymer dispersion according to Claim 1, **characterized in that** the polychloroprene dispersion after the temperature treatment has a gel content of 5% to 30% by weight.

7. Use of the polymer dispersions according to Claim 1 for producing adhesive formulations.

8. Adhesive formulations comprising aqueous polymer dispersion according to Claim 1.

9. Substrates coated with adhesive formulations according to Claim 8.

## Revendications

1. Dispersion aqueuse de polymère, pouvant être obtenue par
a) préparation d'une dispersion aqueuse de polychloroprène présentant une proportion insoluble dans des solvants organiques (proportion de gel) de 0,1% en poids-30% en poids, par rapport au polymère, préparée par polymérisation de chloroprène et de 0 à 20 parties en poids, par rapport à 100 parties en poids en chloroprène, de monomères éthyléniquement insaturés, copolymérisables avec du chloroprène en présence de 0-1 mmole d'un régulateur, par rapport à 100 g de monomère, à 10°C-25°C en émulsion aqueuse et
b) entreposage consécutif de la dispersion à des températures de 50°C-110°C jusqu'à ce que la proportion de gel soit augmentée d'au moins 10% à 1-60% en poids, par rapport au polymère.

2. Dispersion aqueuse de polymère selon la revendication 1, **caractérisée en ce que** la dispersion de polychloroprène présente un diamètre de particules de 60 à 120 nm.

3. Dispersion aqueuse de polymère selon la revendication 1, **caractérisée en ce que** la teneur en régulateur se situe de préférence à 0 jusqu'à 0,25 mmole, par rapport à 100 g de monomère.

4. Dispersion aqueuse de polymère selon la revendication 1, **caractérisée en ce que** la dispersion présente, avant le traitement thermique, une teneur en gel de 0,5-5% en poids.

5. Dispersion aqueuse de polymère selon la revendication 1, **caractérisée en ce que** l'entreposage de la dispersion a lieu à 60 jusqu'à 90°C.

6. Dispersion aqueuse de polymère selon la revendication 1, **caractérisée en ce que** la dispersion de polychloroprène présente, après le traitement thermique, une teneur en gel de 5-30% en poids.

7. Utilisation des dispersions de polymère selon la revendication 1 pour la préparation de formulations adhésives.

8. Formulations adhésives contenant une dispersion aqueuse de polymère selon la revendication 1.

9. Substrats revêtus par des formulations adhésives selon la revendication 8.
